(19) **Europäisches Patentamt / European Patent Office / Office européen des brevets**

(11) **EP 2 884 431 A1**

(12) **EUROPEAN PATENT APPLICATION**

(43) Date of publication:
**17.06.2015 Bulletin 2015/25**

(51) Int Cl.:
*G06N 3/00* (2006.01)

(21) Application number: **13196458.7**

(22) Date of filing: **10.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens AG Österreich**
**1210 Wien (AT)**

(72) Inventor: **Dhungana, Deepak**
**2201 Seyring (AT)**

(74) Representative: **Maier, Daniel Oliver et al**
**Siemens AG**
**Postfach 22 16 34**
**80506 München (DE)**

(54) **Method for the configuration of a system-of-systems**

(57)     The Invention relates to a method for the configuration of a system-of-systems by use of a computer, comprising the following phases
- scoping, where the component systems are identified and their roles described by specifying a series of participation statements;
- attribute extraction and system characterization; in this phase the participation statements are analyzed and configuration parameters are extracted from them;
- the phase of impulse configuration where a set of requirements is defined, and by means of membrane computing a configuration for the System-of-systems which fulfills the requirements is derived.

**Description**

The invention relates to a method for the configuration of a system-of-systems.

The increasing scale and complexity of control applications have reached a point that imposes qualitatively new demands on control systems technology. Just as the transition from single-input, single-output systems to multivariable control required new theories, tools, and techniques, similarly, the new imperatives cannot be satisfied by evolutionary extensions of the state of the art.

Emerging applications are not just large-scale and complex; they are also characterized by decentralized, distributed, networked compositions of heterogeneous and (semi)autonomous elements. These new "systems" are, in fact, "systems-of-systems". The term has arisen from the systems engineering community and reflects the interest in concepts and developments such as smart grids, integrated supply chains, collaborative enterprises, and next-generation air traffic management.

In other words, a system-of-systems is a collection of independent systems that work together to create a new, more complex system which offers more functionality and performance than simply the sum of the constituent systems. This means, a system-of-systems is a task-oriented or dedicated configuration of a set of component systems that are available to deal with a certain task. Configuration of a system-of-systems is the task of selecting the optimal subset of component systems, that can perform the required task.

From a mathematical point of view the system-of-systems configuration problem can be described as follows:

Given is a finite set of component systems.

$$S = \{S_1, S_2, \ldots, S_n\}$$

The systems possess certain attributes (e.g. for the example of a catastrophe management system attributes would be the number of casualties than can be handled, geographic location, availability of resources like beds, fire vehicles etc).

The set of all system-of-systems attributes is defined as:

$$A = \{A_1, A_2, \ldots, A_m\}$$

The domain (set of all possible values) for each attribute is also considered to be given. In case of attributes with infinite domains (e.g., numbers), a range of values as categories will be defined. For example, for an attribute "number of vehicles", there could be three possible values: <10; 10 to 20; >20

$$Domain(A_i) = \{Vi_1, Vi_2, \ldots, Vi_k\} \ \ where \ A_i \in A$$

A tuple consisting of an attribute and a value from its corresponding domain is called a characteristic. Each system can be characterized by a finite set of such characteristics. The set of all possible System-of-systems characteristics is defined as:

$$C(SoS) = \bigcup_{i=1}^{m} A_i \times Domain(A_i)$$

Each component system possesses a subset of System-of-systems characteristics, meaning that can provide services related to one particular area or aspect of the overall System-of-systems functionality.

$$C(S_i) \subseteq C(SoS)$$

Now, whenever there is a need to configure the system, the requirements for configuration, referred to as "impulse", can be specified using a set of characteristics. Let C(R) be the set of characteristics of a required impulse execution System-of-systems (SoS fulfilling the input requirements).

$$C(R) \subseteq C(SoS)$$

The system-of-systems configuration problem is stated as: find an optimal set of systems $S_{impuls} \subseteq S$, that together possess all the characteristics specified in configuration requirement R, i.e., find $S_{impuls} \subseteq S$ such that $C(S_{impuls}) \supseteq C(R)$.

It is object of the invention to provide a solution for the system-of-systems configuration problem.

This object is achieved with a method according to claim 1.

Membrane computing is a variation of the so called P-system, a computational model in the field of computer science that performs calculations using a biologically-inspired process.

A P-system is defined as a series of membranes containing chemicals (in finite quantities), catalysts and rules which determine possible ways in which chemicals may react with one another to form products. Rules may also cause chemicals to pass through membranes or even cause membranes to dissolve.

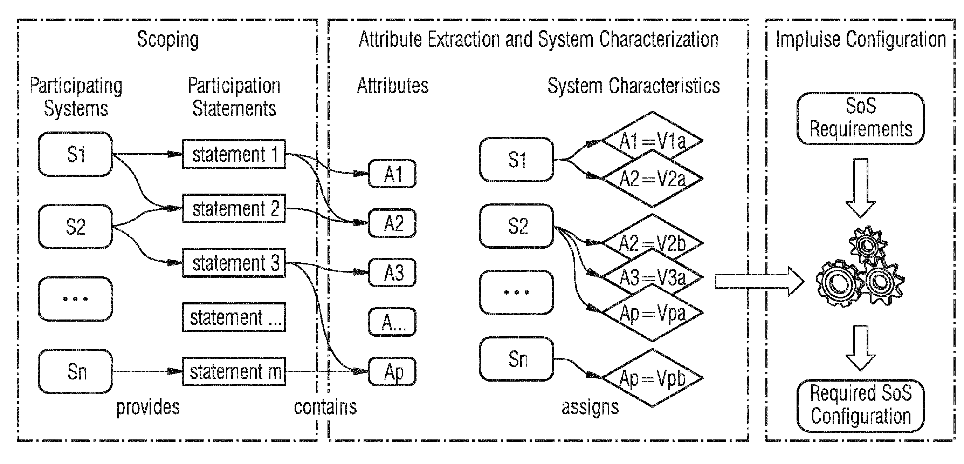

An exemplary embodiment of the invention is shown in Fig. 1

As shown in Fig. 1 the overall approach of the invention consists of three continuous phases:

- scoping, where the component systems are identified and their roles described by specifying a series of participation statements.
- attribute extraction and system characterization; in this phase the participation statements are analyzed and configuration parameters are extracted from them;
- the phase of impulse configuration where a set of requirements is defined, and by means of membrane computing a configuration for the system-of-systems which fulfills the requirements is derived.

Scoping is understood as an activity that bounds a system or set of systems by defining those behaviors or aspects that are "in'" and those behaviors or aspects that are "out". In the context of system-of-systems it means to identify component systems that could potentially be part of any impulse execution system-of-systems.

During the system-of-systems scoping process each identified component system describes its role by specifying a series of participation statements.

Participation statements can be seen as descriptions of what the system can perform and conditions under which the systems can or need to be integrated and constraints related to services provided by other potential systems. The following table presents a few examples of such participation statements for the system-of-systems product line of a catastrophe management system. These statements are domain-specific viewpoints of the stakeholders on the overall functionality of the system-of-systems.

In the phase of Attribute Extraction and System Characterization the participation statements are analyzed and configuration parameters are extracted from them in order to understand variability of services provided by a System-of-systems. The result of this step is a list of System-of-systems attributes. Each participation statement is considered as an answer to a more generic question. By formulating such a generic question, it becomes easier to understand which aspect of the variability is covered by the system. The attributes are reused across different systems, which allow us to find the different possible values of the attribute. The following table 1 presents an example of some component systems, their participation statements and attributes extracted.

Table. 1

| Component System | Participation Statement | Identified Parameters |
|---|---|---|
| Floridsdorf Fire Department | Statement 1: We are specialized for forest fire in Vienna region. | Fire Type = forest Reaion = Vienna |
| | Statement 2: Our department has access to 121 volunteers. | Nr. Volunteers = 121 |
| | Statement 3: We can provide 23 fire fighting vehicles. | Vehicle Type = Fire Brigrade Nr. Vehicles = 23 |

(continued)

| Component System | Participation Statement | Identified Parameters |
|---|---|---|
| Gerasdorf Fire Department | Statement 4: We are specialized for building fires in and around Gerasdorf. | Region = Gerasdorf |
| | Statement 5: Our department has access to 3 helicopters. | Helicopter available = true Nr. Helicopters = 3 |
| Vienna Police | Statement 6: Call us for any fire, crime or accident scenes. | Fire = true Crime = true Accident = true |
| Vienna UKH | Statement 7: A maximum of 100 emergency patients can be handled by our staff. | Nr. Emergency Patients = 100 |
| Vienna AKH | Statement 8: We have beds for 233 outdoor patients. | Nr beds = 233 |
| | Statement 9: Specialized in kidney surgery. | Kidney specialists = true |

The component systems are then characterized based on the system-of-systems attributes. The answers to the extracted attributes (because attributes can be seen as questions that can asked to the user responsible for configuring a product), are present in the participation statements themselves. So by providing a value to each related attribute, the participating systems can be characterized.

The result is a system-of-systems knowledge base. The individual systems and the variability of their integration in the system-of-systems is reduced to the set of characteristics. These characteristics are refined and updated as the system is used -- more and more participation statements can be added, leading to more finer granularity of configuration options.

In the impulse configuration phase a set of requirements -the configuration impulse - is defined, that needs to be fulfilled by the configured system-of-systems. In other words, it is a description of the system regarded.

As an example, a situation where a fire breaks out in a nearby forest in Vienna region shall be considered.

The question that needs to be answered now is which of the systems must be included in the System-of-systems to deal with this concrete issue.

In order to map the given requirements to the description of the systems, the configuration impulse based on the known attributes of the System-of-systems will be characterized. For example, a requirement statement such as, "we need to deal with a forest fire near Vienna, we currently have 10 wounded."' is characterized by System-of-systems attributes and values as: {fire=true; fire type=forest; region=Vienna; nr. of patients=10;}.

If it is not possible to find a mapping (i.e., no attribute is already defined), there are two ways of dealing with this: (a) Add new component systems to the System-of-systems Model, which are related to the required attribute (b) Add more participation statements and extract the required attribute.

After the mapping is done, configuring System-of-systems is about finding a set of component systems that have the same characteristics as specified by the configured impulse.

The characteristics of the impulse and the characteristics of the system-of-systems are then fed into a membrane-based solver. The result is the required impulse execution System-of-systems.

Core of the present invention is the use of a new kind of solver that can be adopted to calculate the optimal impulse execution system-of-systems. The solver is constructed using membranes, also called P-Systems, and uses metaphors of chemical reactions occurring in living cells, as for example described in *"Gheorghe P'ă aun, Computing with Membranes, Journal of Computer and System Sciences, Volume 61, Issue 1, August 2000, Pages 108-143"*

P-Systems are devoted to abstract computing ideas from the structure and the functioning of living cells. They are parallel, distributed computing models, processing multisets of symbols in compartments. For the present invention a variant of P-Systems with active membranes is used. In such systems, membranes play an important role in the reactions which take place in a cell, they can evolve themselves, either changing their characteristics or even getting divided. These properties are exploited to create an exponential workspace in linear time allowing to solve the NP-complete configuration problem in linear time. See also " M. J. Perez-Jimenez and A. Riscos-Nunez. A linear-time solution to the knapsack problem using P-systems with active membranes. In Workshop on Membrane Computing, pages 250--268, 2003".This kind of break-through is possible because membranes are treated parallel computing devices and it is possible to create exponential number of membranes in linear time.

The essential ingredient of a P-system is its membrane structure. Membranes are three-dimensional vesicles, dividing the cell in different compartments. The compartments of a cell contains substances (ions, small molecules, macromolecules) swimming in an aqueous solution. The objects evolve according to given rules; the objects can pass through membranes, the membranes can also dissolve or divide. The evolution rules are localized or associated with the regions or the membranes of the system. In a variant of P-systems with active membranes, the membranes play an important role in the reactions which take place in a cell. The molecules swimming inside the membranes are represented by multisets. A multiset can be represented in many ways, but the most compact one is in the form of a string. For instance, if the objects **a, b, c** are present in, respectively, **5, 2, 6** copies each, we can represent this multiset by the string $a_5b_2c_6$; of course, all permutations of this string represent the same multiset.

Objects in a P-system evolve in a scheme specified by multiset-rewriting rules and communication rules. Multiset-rewriting rules can be compared to reaction equations as customarily used in chemistry and biochemistry. The communication rules (antiport and symport rules) are used to pass the chemicals through the membranes. This model of computing reflects similar dynamics like real-world S-o-S. Here, we adhere the definition of P-systems with active membranes. Each of the membranes can be electrically charged, which is given by the set of polarizations **Pol = {+, -, 0}**. A P-system with active membranes of degree **m** is defined as:

$$\Pi = (O, H, \mu, w_1, w_2, \ldots, w_m, R)$$

Where,

1. $m \geq 1$ is the initial number of membranes (also known as the degree of the system)

2.0 is the alphabet of the objects, representing the chemical substances, that can swim around

3. H is a finite set of labels for the membranes

4. $\mu$ is the membrane structure, consisting of m membranes having initially neutral polarizations, labeled with elements of H. The hierarchical structure of the membrane is represented in a textual form. For example, the string **[a [b [e [g]g [f]f]e]b[c]c [d]d]a** represents the membrane structure given below. The ordering and position of the membranes in the same compartment makes no difference.

5. **$w_1$, $w_2$,...,$w_m$** are strings over O, describing the multiset of objects places in the m regions of $\mu$

6. R is a set of developmental rules of the following forms (table 2.):

Table 2

| | |
|---|---|
| r1: $[_h \ a \to v]_h^e,$ <br> for $h \in H, e \in Pol, a \in O, v \in O^*$ | These are object evolution rules, associated with membranes and depending on the label and the charge of the membranes, but not directly involving the membranes (i.e., membranes do not take part in the application of these rules). If this rule is applied to a membrane called h, then an object a evolves to a multiset v. |
| r2: $a[_h \ ]_h^{e_1} \to [_h b]_h^{e_2},$ <br> for $h \in H, e_1, e_2 \in Pol, a, b \in O$ | These are communication rules, where a object a moves into a membrane h, being possibly modified during the process to another object b. Also the polarization of the membrane can change from e1 to e2; the label of the membrane remains the same. |
| r3: $[_h \ a]_h^{e_1} \to [_h \ ]_h^{e_2} b,$ <br> for $h \in h, e_1, e_2 \in Pol, a, b \in O$ | These are communication rules, where a object a moves out of a membrane h, being possibly modified during the process to another object b. Also the polarization of the membrane can change from e1 to e2; the label of the membrane remains the same. |
| r4: $[_h \ a]_h^e \to b,$ <br> for $h \in H, e \in Pol, a, b \in O$ | These are dissolving rules, where the membrane h disappears after the rule is applied. The objects in the membrane may change during the process from a to b. |

(continued)

| | |
|---|---|
| $r5: \left[_h\ a\right]_h^{\varepsilon_1} \rightarrow \left[_h\ b\right]_h^{\varepsilon_2} \left[_h\ c\right]_h^{\varepsilon_3}$, for $h \in H, e_1, e_2, e_3 \in Pol, a, b, c \in O$ | These are division rules, where the membrane h in reaction with the object a divides in to two membranes with the same label, possibly of different polarizations; the object specified by the rule is replaced in the two new membranes by possibly new objects; the remaining objects are duplicated and may evolve by evolution rules |

The objects in a P-system evolve in the maximally parallel manner. Just like chemical reactions inside the membranes of a cell, there is no priority among the rules. If more than one rule can be applied at one time, then one of them is randomly selected. The number of membranes may increase if rules of type r5 are applied; and decrease if rules of type r4 are applied. The increase of membranes can be exponentially high in a linear number of steps: using successively a division rule, due to the maximal parallelism, in n steps, $2^n$ copies of the same membrane are obtained.

To get a system-of-systems configuration solver based on Membrane-based Computing a P-system for each instance of the System-of-systems configuration problem is derived by mapping the System-of-systems constructs. The input and output parameters are defined as follows:

**Input:** The input to the configuration solver is represented as a tuple:

$$Input = \ \langle n, C(SoS), \ \ \{\{i_1^1, \ldots i_k^1\}, \ldots, \{i_1^n, \ldots i_j^n\}\}, \ \ \{r_1, \ldots r_k\}\rangle$$

Where

- N is the number of component systems.
- **C(SoS)** is the set of all System-of-systems characteristics
- $\{\{i_1^1, \ldots i_k^1\}, \ldots, \{i_1^n, \ldots i_j^n\}\}$ is a set of n sets of integers representing the characteristics of the n systems. Each integer in the set represents the index of a characteristic in $C(SoS)$.
- $\{r_1, \ldots r_k\}$ is a set of integers representing the characteristics of the required system, where each integer in the set represents the index of a characteristic in **C(SoS).**

**Example Input:** Let consider a System-of-systems with 5 component systems ($S_1, \ldots, S_5$) and a total of 4 Boolean attributes ($A_1, \ldots, A_4$), i.e., the domain of each attribute is **{T,F}**. This means there are total 8 System-of-systems characteristics. lets assume that we require a set of systems specified by **{($A_1$, T), ($A_2$, T), ($A_3$, F)}**.

Let the attributes of the component systems be specified as in this table (empty entries in the table, mean that the subsystem does not possess this capability- meaning it is treated as False by the solver):

| | $A_1$ | $A_2$ | $A_3$ | $A_4$ |
|---|---|---|---|---|
| $S_1$ | T | T | | |
| $S_2$ | F | T | T | |
| $S_3$ | T | | F | |
| $S_4$ | T | T | T | T |
| $S_5$ | | | F | T |

This instance of the System-of-systems configuration problem can be represented as the following tuple:

$$Input = \langle 5,$$
$$\{\langle A_1, T\rangle, \langle A_1, F\rangle, \langle A_2, T\rangle, \langle A_2, F\rangle,$$
$$\langle A_3, T\rangle, \langle A_3, F\rangle, \langle A_4, T\rangle, \langle A_4, F\rangle\},$$
$$\{\{1, 3\}, \{2, 3, 5\}, \{1, 6\}, \{1, 3, 5, 7\}, \{6, 7\}\},$$
$$\{1, 3\}\rangle$$

**Output:** The output is a set of integers which represents a subset of S (the elements of the set being indices of the systems included in the subset). For example, the output for the problem described above would be {1, 5}, meaning S1 and S5 represent the solution for the given input.

In the beginning, the solver consists of two membranes, one outer membrane **s** and an inner membrane **e** The computation consists of four phases (these phases run in parallel). Lets consider a computation, where there are **n** systems, **q** characteristics in the configuration impulse.

*Preparation Phase.* In the first phase of computation, a series of membrane division rules are applied to create a membrane for every subset of **S.** When this preparation phase is complete, each membrane contains molecules representing the set of characteristics ($c^1$,..., $c^b$) possessed by the subsystem represented by that membrane.

*Comparison Phase.* The second phase begins with the introduction of the characteristics of the required system ($r^1$,...,$r^q$) to each membrane. These molecules react with the system characteristic molecules present in the membranes to produce "match molecules"' **m.** If the number of match molecules is equal to number of characteristics of the required system then a candidate for the solution is found.

*Collecting Phase.* The third phase is related to comparing all the candidate subsystems to identify which one is the most suitable one, i.e., consists of the minimum number of component systems. To find this out, each candidate membrane sends out representative molecules to the skin membrane. The number of representative molecules originating from the candidate membranes is equal to the number of component systems represented by that membrane.

*Output Phase.* The representative molecules from each candidate membrane react with each other, such that the molecules that are present in a higher number all disappear. If the two reactants are present in the same number, then one of them (selected randomly) disappears. In the end, only representative molecules of one membrane remain, these encode the subsets that are required to fulfill the given set of requirements.

Formally the System-of-systems configuration solver membrane system is defined as:

$$\Pi_{sos} = (O, H, \mu, w_s, w_e, R)$$

Where

- **O** is the alphabet (the set of molecules known to the system defined as $O=\{Rep^{\{...\}}, m, c^1, c^2,...c^y, r^1, r^2,...r^z\}$ where $Rep^{\{...\}}$ represents the identifier for each subset of **S,** $c^y$ represents the set of all possible system characteristics, $r^z$ represents the counters for the number of matching characteristics.
- **H** is the set of names for the membranes. The names of the membranes are not relevant for our solver. We differentiate only between the outer membrane skin (s) and the inner ones e. H = {s, e}
- $\mu=[s[e]e]s$ represents the initial membrane structure.
- The initial multisets are $w_s =\{\}$ and $w_e=k_0.$
- The set of evolution rules, R consists of the following rules:

    1. Division rules to generate a membrane for each subset of S:

$$[_e\ k_i]_e^0 \rightarrow [_e\ h]_e^-\ [_e\ k_i]_e^+, \text{ for } i = 0,\ldots,n.$$
$$[_e\ k_i]_e^+ \rightarrow [_e\ k_{i+1}]_e^0\ [_e\ k_{i+1}]_e^+, \text{ for } i = 0,\ldots,n-1.$$

When an object $k_i(i<n)$ is present in a neutrally charged membrane, we pick the element $a_i$ for its associated subset and divide the membrane. In one of the new membranes, the object **h** appears and the membrane leaves the generation stage and no further elements will be added to the subset. But the other membrane must generate membranes foe other possible subsets which are obtained by adding elements of index i+1 or higher.

    2. Rules to calculate the number of matching characteristics (requirements fulfilled by the subset of component systems are defined as

$$[_e\ c^i r^j\ \rightarrow\ m]_e^-, \text{ for } i = 1...b \text{ and } j = 1...z$$

The requirement molecules ($r^1$,...,$r^z$) are provided as input to each membrane. These react with the set of characteristics ($c^1$,...$c^b$) possessed by the subsystem represented by that membrane. The number of molecules of type m reflects how many configuration requirements are fulfilled by the associated subset of systems.

    3. Rules to identify all subsets that have 100% matches.

$$\left[_{e}\ k_{x}\ m_{x}\right]_{e}^{-} \to \left[_{e}\quad\right]_{e}^{-} Rep_{x}^{\{S_{1},S_{2},...,S_{x}\}}$$

The multiplicity of k (represented by x in this case) in each membrane represents the number of systems involved in that subset (see rule 1). Whenever the multiplicity of **m,** matches the multiplicity of **k,** the membrane sends out representative molecules (**Rep**$^{\{...\}}$) to the skin membrane. **S$_1$, S$_2$,...,S$_r$** stands for the subset represented by the skin membrane. The number of (Rep$^{\{...\}}$) molecules is also equal to the multiplicity of **k.**

4. Rules to compare the minimal subset among all available matching subsets:

$$\left[_{s}\ Rep_{x}^{1}\ Rep_{y}^{2} \to Rep_{y}^{2}\right]_{s}^{0};\ x > y$$
$$\left[_{s}\ Rep_{x}^{1}\ Rep_{y}^{2} \to Rep_{y}^{1}\right]_{s}^{0};\ x \le y$$

Whichever type of representative molecule is higher in number disappears during the reaction. If equal sized subsets react with each other, one of them is randomly chosen to disappear. In the end, only the molecules from the smallest subset remain in the skin membrane. Whenever no reactions more occur, the reaction has ended and the representative molecule in the skin membrane represents the smallest system of systems capable of dealing with the input.

Different strategies could be defined to select the optimal solution, when more than one solution is available. However, this aspect is out of scope of this invention disclosure.

By applying the paradigm of membrane-based computing to configuration problems, it is possible to solve typically NP hard problems in linear time. According to an exemplary embodiment of the invention, a variant of membrane-based computing paradigm is used, where membranes play an important role in the reactions which take place in a cell, they can evolve themselves, either changing their characteristics or even getting divided. We exploit these properties to create an exponential workspace in linear time allowing us to solve the NP-complete configuration problem in linear time (inspired by [Perez '2003]) This kind of break-through is possible because membranes are treated parallel computing devices and it is possible to create exponential number of membranes in linear time.

Apart from the advantages of membrane-based computing, the invention also shows how the different aspects of completely independent systems can be associated with each other through parameter extraction. The integrative nature of the invention can play an important role in modeling systems and systems and understanding dependencies among heterogeneous systems.

**Claims**

1. Method for the configuration of a system-of-systems by use of a computer, comprising the following phases

   - scoping, where the component systems (S1, S2, ...Sn)are identified and their roles described by specifying a series of participation statements (statement1, statement 2, statement 3, statement ..., statement m);
   - attribute extraction and system characterization; in this phase the participation statements are analyzed and configuration parameters are extracted from them;
   - the phase of impulse configuration where a set of requirements is defined, and by means of membrane computing a configuration for the System-of-systems which fulfills the requirements is derived.

2. System-of-system configuration solver, based on the principles of membrane computing and prepared to be applied in a method according to claim 1, comprising:

   - means for creating membranes in a preparation phase;
   - means for introducing characteristics of the required system in the membranes in a comparison phase;
   - means for comparing the candidate subsystems to find the most suitable ones in a collecting phase;
   - output means for presenting the result.

**Scoping**

Participating Systems — Participation Statements

S1

S2

...

Sn

statement 1

statement 2

statement 3

statement ...

statement m

provides

**Attribute Extraction and System Characterization**

Attributes — System Characteristics

A1

A2

A3

A...

Ap

contains

S1 — $A1=V1a$, $A2=V2a$

S2 — $A2=V2b$, $A3=V3a$, $Ap=Vpa$

...

Sn — $Ap=Vpb$

assigns

**Implulse Configuration**

SoS Requirements

Required SoS Configuration

EP 2 884 431 A1

Europäisches
Patentamt

European
Patent Office

Office européen
des brevets

## EUROPEAN SEARCH REPORT

Application Number

EP 13 19 6458

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEEPAK DHUNGANA ET AL: "Generation of conjoint domain models for system-of-systems", PROCEEDINGS OF THE 12TH INTERNATIONAL CONFERENCE ON GENERATIVE PROGRAMMING: CONCEPTS & EXPERIENCES, GPCE '13, 27 October 2013 (2013-10-27), pages 159-168, XP055116641, New York, New York, USA DOI: 10.1145/2517208.2517224 ISBN: 978-1-45-032373-4 | 1 | INV. G06N3/00 |
| A | * page 159 - page 168, left-hand column, paragraph 3 * | 2 | |
| A | DANIEL DIAZ-PERNIL ET AL: "A fast solution to the partition problem by using tissue-like P systems", BIO-INSPIRED COMPUTING: THEORIES AND APPLICATIONS, 2008. BICTA 2008. 3RD INTERNATIONAL CONFERENCE ON, IEEE, PISCATAWAY, NJ, USA, 28 September 2008 (2008-09-28), pages 43-48, XP031352122, ISBN: 978-1-4244-2724-6 * page 43 - page 47, right-hand column, paragraph 1 * | 1,2 | |
| A,D | MARIOJ PÃ CR REZ-JIMÃ CR NEZ ET AL: "A Linear-Time Solution to the Knapsack Problem Using P Systems with Active Membranes", 13 January 2004 (2004-01-13), MEMBRANE COMPUTING; [LECTURE NOTES IN COMPUTER SCIENCE;;LNCS], SPRINGER-VERLAG, BERLIN/HEIDELBERG, PAGE(S) 250 - 268, XP019002234, ISBN: 978-3-540-20895-2 * page 250 - page 262 * | 1,2 | |

TECHNICAL FIELDS SEARCHED (IPC)

G06N

-/--

The present search report has been drawn up for all claims

| Place of search | Date of completion of the search | Examiner |
|---|---|---|
| The Hague | 8 May 2014 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 19 6458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VAN NGUYEN ET AL: "Balancing Performance, Flexibility, and Scalability in a Parallel Computing Platform for Membrane Computing Applications", 25 June 2007 (2007-06-25), MEMBRANE COMPUTING; [LECTURE NOTES IN COMPUTER SCIENCE], SPRINGER BERLIN HEIDELBERG, BERLIN, HEIDELBERG, PAGE(S) 385 - 413, XP019085668, ISBN: 978-3-540-77311-5 * page 385 - page 412, paragraph 4 * ----- | 1,2 | |
| A | LIANG HUANG ET AL: "Dynamic multi-objective optimization based on membrane computing for control of time-varying unstable plants", INFORMATION SCIENCES, AMSTERDAM, NL, vol. 181, no. 11, 31 December 2010 (2010-12-31), pages 2370-2391, XP028367411, ISSN: 0020-0255, DOI: 10.1016/J.INS.2010.12.015 [retrieved on 2011-01-14] * page 2370 - page 2390, paragraph 4 * ----- | 1,2 | |
| A | US 2007/094166 A1 (ADDISON EDWIN [US]) 26 April 2007 (2007-04-26) * the whole document * ----- | 1,2 | TECHNICAL FIELDS SEARCHED (IPC) |

The present search report has been drawn up for all claims

| Place of search | Date of completion of the search | Examiner |
|---|---|---|
| The Hague | 8 May 2014 | Volkmer, Markus |

EPO FORM 1503 03.82 (P04C01)

## ANNEX TO THE EUROPEAN SEARCH REPORT
## ON EUROPEAN PATENT APPLICATION NO.

EP 13 19 6458

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2014

| Patent document cited in search report | Publication date | Patent family member(s) | Publication date |
|---|---|---|---|
| US 2007094166 A1 | 26-04-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. J. PEREZ-JIMENEZ ; A. RISCOS-NUNEZ.** A linear-time solution to the knapsack problem using P-systems with active membranes. *Workshop on Membrane Computing,* 2003, 250-268